# EUROPEAN PATENT APPLICATION

(11) **EP 0 660 084 A1**
(43) Date of publication of application: **28.06.1995**
(21) Application number: 94203313.5
(22) Date of filing: 14.11.1994
(51) Int. Cl.: G01D 5/165

(54) **Rotational sensor**

(30) Priority: 23.12.1993 US 171479
(71) Applicant: GENERAL MOTORS CORPORATION, Detroit Michigan 48202 (US)
(72) Inventor: Kornburger, Steven Alan, Waterford, MI 48328 (US); Strayer, Lance Ronald, Clarkston, MI 48346 (US); Crawford, Daniel Alexander, Burton, MI 48509 (US)
(74) Representative: Denton, Michael John

(57) **Abstract**

Contactors (40,60a-c) for rotational automotive potentiometric position sensors have opposing ends (44,48;64,68) mated with electrically conductive and resistive surfaces (44,48;64,68) fitted in a housing (88) along a single dimension so as to reduce part and assembly tolerances and decrease sensor height, especially in redundant sensor configurations in which a plurality of such sensors may be stacked, such as along the length of a rotating shaft (72) the degree of rotation of which is to be measured.

## Description

The present invention relates to sensing apparatus, for example to sensors for translating angular displacement into electrical signals for automotive applications.

Position sensors which translate displacement of a moving part into one or more electrical output signals are finding increased application in automotive vehicles, due, in part, to the increased role of electronics in automotive control and diagnostics. Conventional potentiometric position sensors which translate rotation of moving automotive parts may be of the contacting type, in which an electrically conductive contactor provides an electrical connection between conductive and resistive surfaces on the sensor. The contactor is disposed on a rotor element that rotates with the moving automotive part.

As the rotor rotates, the contactor moves along the resistive surface, including a varying portion of the resistive surface into an electrical circuit which passes from the conductive surface through the contactor to the included portion of the resistive surface to an electrical reference. A voltage divider is formed by applying a potential across the entire resistive surface, such that the varying potential from the conductive surface to the reference indicates rotational displacement of the rotor and thus of the moving part.

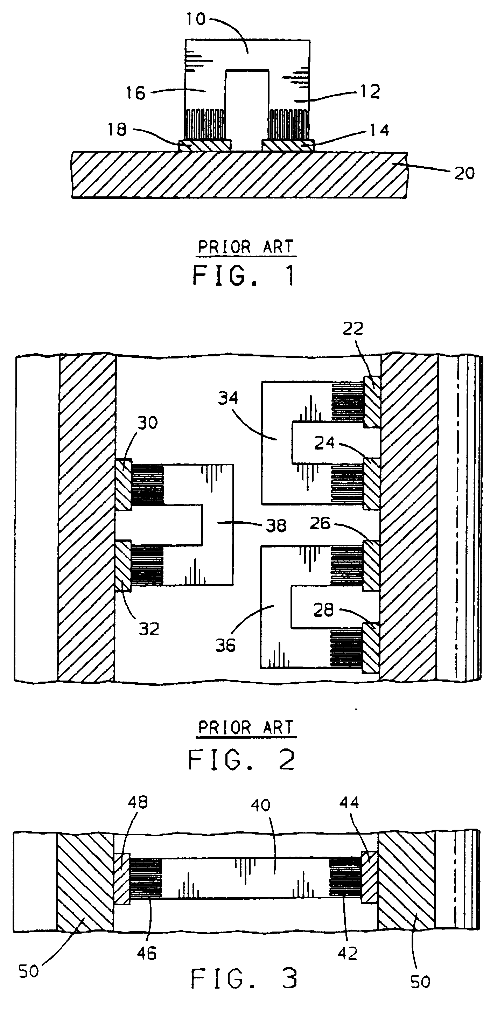

A degree of position sensor fault tolerance is provided when a plurality of sensors are combined in a redundant configuration. When three or more sensors are so combined, a "majority rules" sensor output voting strategy may be employed, not only to diagnose sensor faults but also to continue redundant position detection despite certain diagnosed faults. Multiple contactors are required in redundant rotational potentiometric position sensors of the contacting type. Such contactors are known to be "U" shaped, such as shown in the prior art of FIGURE 1, in which a first leg 12 of "U" shaped contactor 10 passes along a conductive surface 14 of a sensing element 20 and a second leg 16 passes along a resistive surface 18 of the sensing element 20.

Such "U" shaped contactors, and especially those arranged in a redundant configuration, such as the prior art contactors 34, 36, and 38 of FIGURE 2, add to overall sensor height as they require a stacking of resistive and conductive surfaces to mate with a corresponding contactor. For example, in the prior art redundant configuration of FIGURE 2, four surfaces 22-28 are stacked, adding significantly to sensor height.

Furthermore, for proper alignment of each of such "U" shaped contactors and their corresponding conductive and resistive surfaces, the contactors and surfaces must be assembled within a number of dimensional tolerances. In the prior art configuration of FIGURE 2, contactor 34 must be of proper size and position relative to conductive surfaces 22 and 24 to remain in physical contact with such surfaces while the contactor 34 rotates. Likewise, contactor 36 must be properly sized and positioned relative to surfaces 26 and 28, and contactor 38 properly sized and positioned relative to surfaces 30 and 32 to remain in physical contact with such surfaces while the contactor rotates.

Proper output correlation between each of the multiple sensors in a redundant configuration requires precision assembly within further tolerances. For example, for a given position of the measured moving automotive part, the output of the three sensors of the prior art configuration of FIGURE 2 will substantially correspond when all three contactors 34, 36 and 38 are at a common position along their corresponding resistive surfaces. In such prior art relying on "U" shaped contactors, such positional correspondence requires assembly within a significant number of tolerances. Such a substantial number of part and assembly tolerances generally adds to sensor cost.

The present invention seeks to provide improved sensing apparatus.

According to an aspect of the present invention, there is provided sensing apparatus as specified in claim 1.

It is possible to provide sensor contacts with a shape and configuration and corresponding conductive and resistive surfaces which can lead to significantly reduced sensor height and a reduced number of required part and assembly tolerances.

Contacting ends of the contactor are preferably opposed along a single contactor dimension and corresponding conductive and resistive surfaces mating with the contactor ends are likewise preferably disposed on an element in the sensor along a single dimension significantly reducing sensor height. Constant physical contact is preferably maintained between the contactor ends and the conductive and resistive surfaces throughout the motion of the measured part.

The height reduction benefit which can be provided by the design of contactor can be multiplied when the contactor is arranged in a redundant configuration, in which such contactors and their conductive and resistive surfaces are stacked, such as along the length of a shaft the degree of rotation of which is to be measured. Furthermore, such stacking of multiple contactors in a redundant configuration may occur along a single dimension, reducing assembly tolerances significantly. The simple shape of the contactor can reduce part size tolerances over that of the prior art, which has provided contactors of relatively complex shape.

An embodiment of the present invention is described below, by way of example only, with reference to the drawings, in which:
FIGURE 1 is a cross-sectional view of a prior art "U" shaped contactor;
FIGURE 2 is a cross-sectional view of a prior art "U" shaped contactors in a configuration corresponding to a prior art redundant position sensing application;
FIGURE 3 is a cross-sectional view of an embodiment of a potentiometric position sensor contactor configuration;
FIGURE 4 is a cross-sectional view of a redundant contactor configuration, taken along line 4-4 of FIGURE 5;
FIGURE 5 is a plan view in cross-section of a redundant contactor configuration applied to sense rotational displacement of a shaft; and
FIGURE 6 is a schematic diagram of the element used in the contactor configuration of FIGURE 5.

Referring to FIGURE 3, an electrically conductive contactor 40 rotates within an element 50 of a rotational position sensor. A first contactor end 42 of the contactor 40 remains in electrical contact with a conductive surface 44 disposed about a portion of the interior surface of the element 50, and a second contactor end 46 of the contactor 40 opposing the first contactor end 42 remains in electrical contact with a resistive surface 48 disposed about a portion of the interior surface of the element 50. The conductive surface 44 may be composed of any commercially available highly conductive material in which substantially no electrical resistance is present across any portion of the surface. The resistive surface 48 may be composed of any commercially available resistive material that is substantially uniformly resistive across the length of the surface, in which the electrical resistance between any two points on the surface is proportional to the distance between the two points and in which the constant of proportionality is substantially constant for any two points on the surface.

The positional relationships between the first contactor end 42 and the conductive surface 44 and between the second contactor end 46 and the resistive surface 48 are such that as the contactor 40 rotates within the element 50, the first contactor end 42 passes along a length of the conductive surface 44 and the second contactor end 46 passes along a substantially equal length of the resistive surface 48. The contactor 40 provides an electrical connection of very low electrical resistance between the conductive surface 44 and the resistive surface 48.

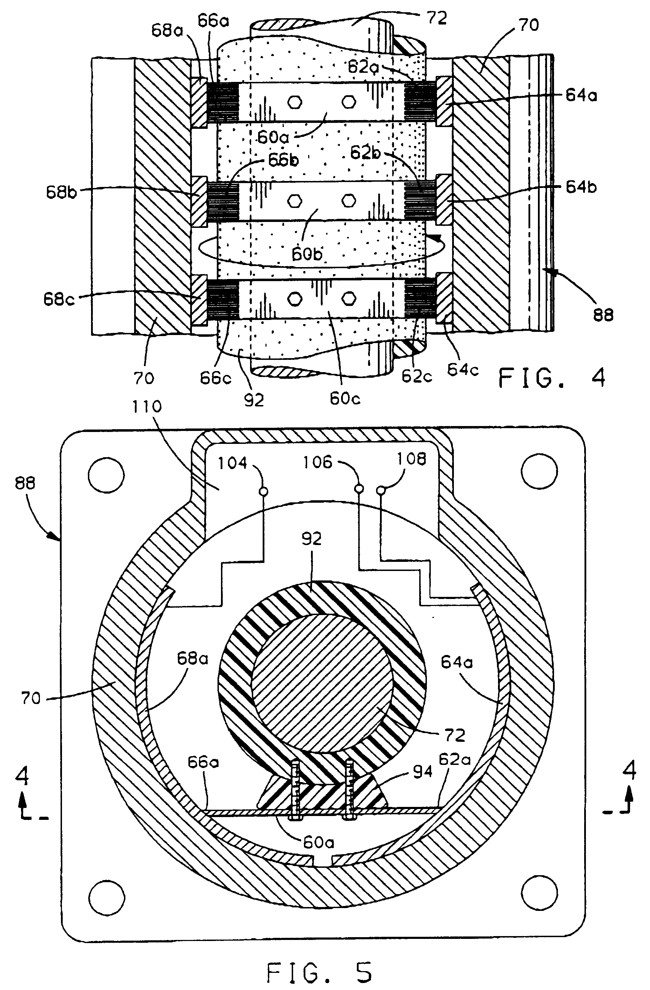

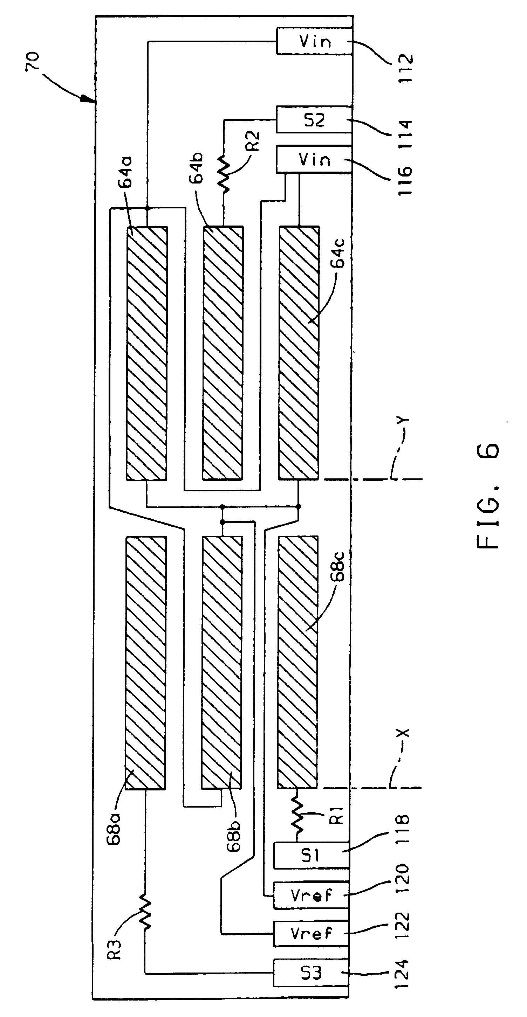

FIGURE 4 provides a front cutaway view of the sensor configuration of FIGURE 5 viewed along and in direction of lines 4-4 of FIGURE 5. Referring to FIGURE 4, three contactors 60a-60c are constructed as in FIGURE 3 and are provided in a redundant position sensing configuration, in which the contactors are stacked vertically along the interior of an element 70 within a housing 88, that is along a longitudinal axis of the element 70. Each of the contactors 60a-60c has a first contactor end 62a-62c, respectively, for providing an electrical connection to a corresponding first surface 64a-64c, respectively, on the element interior. Each contactor 60a-60c has a second contactor end 66a-66c, respectively, opposing the first contactor end of the corresponding contactor and providing an electrical connection to a corresponding second surface 68a-68c, respectively, on the element interior. The surfaces may be constructed of conductive or resistive material, such as the material described for the surfaces of FIGURE 3.

The three contactors 60a-60c rotate with a rotor 92 disposed on a moving automotive part, such as shaft 72. For example, the degree of depression of a vehicle accelerator pedal (not shown) may be indicated by a proportional degree of rotation of the shaft 72, in which measurement of the degree of rotation of the shaft 72 indicates the degree of pedal depression. Alternatively, the shaft 72 may rotate with an internal combustion engine throttle valve in a throttle valve position sensing application, in which measurement of the degree of rotation of the shaft 72 indicates throttle valve position and thus the restrictiveness of an engine air inlet passage in which the valve is disposed. The shaft 72 may rotate with other automotive moving parts the displacement of which is to be measured. It is important to note that the movement of the automotive part need not be rotational movement, as a simple and well-understood conversion between non-rotational movement and rotational movement may be provided so that the non-rotational movement may be measured by means of the described sensor.

The contactors 60a-60c provide packaging advantages, such as over the described prior art contactors. Such advantages are magnified in redundant configurations, such as that of FIGURE 4, in which the contactors may be stacked vertically or horizontally, reducing package height significantly. Furthermore, the number of strict size and assembly tolerances that must be adhered to in construction of a redundant configuration, such as that of FIGURE 4, can be reduced.

For example, as illustrated in FIGURE 4, the contactors 60a-60c in this embodiment may be stacked vertically and centred along a single axis, such as the axis of rotation of shaft 72. The surfaces may then likewise be stacked along the same single axis. Proper spacing of the surfaces and their corresponding contactors along that single axis is assured with a minimum of tolerances. For example, in a three sensor redundant configuration, three positional tolerances along the single axis may be used, each of which defines the position of a contactor and its corresponding surfaces.

In redundant configurations such as that of FIGURE 4, correlation of the output of each of the redundant sensors is simplified over that of the prior art, as the surfaces on the element 70 may be stacked in parallel with common "left" and "right" edge dimensions. Once the surfaces and the contactors properly contact each other and the surfaces on the element 70 share common left and right edge dimensions, sensor output correlation is provided for. Through such configurations, the number of size and assembly tolerances are significantly reduced.

Referring to FIGURE 5, a plan view in cross-section of sensor housing 88 is shown surrounding a moving automotive part such as shaft 72 which rotates as motivated by displacement of a vehicle accelerator pedal (not shown) or a throttle valve (not shown) or any other moving automotive part of which displacement a measurement is desired, as described.

Rotor 92 rotates with the shaft 72. Connecting means 94 disposed between the rotor 92 and one or more contactors 60a-60c allows the contactors to rotate with the rotor 92. In the plan view of FIGURE 5, only one of the contactors 60a is visible, due to the advantageous common dimensions of the redundant contactors of this embodiment, such as the redundant contactors each of which is distinctly illustrated in the described FIGURE 4.

Referring to the one visible contactor 60a in FIGURE 5, a second contactor end 66a provides an electrical connection with a conductive surface 68a disposed on the interior surface of element 70. A first contactor end 62a of contactor 60a provides an electrical connection to a resistive surface 64a disposed on the interior of element 70. As the contactor 60a is of generally known conductive material having low electrical resistance, a low resistance connection between the conductive surface 68a and the resistive surface 64a is formed by the described contactor connection. Such connections are likewise provided to additional contactors and their corresponding conductive and resistive surfaces in the redundant configuration of this embodiment.

As the shaft 72 rotates, the rotor 92 rotates the contactor 60a such that the contactor ends move along the surfaces to which they are electrically connected. A varying portion of the resistive surface 64a is thereby included in a voltage divider circuit, providing a substantially linear relationship between resistance included in the circuit and rotational displacement of the shaft 72. Electrical connection points 104, 106, and 108 carry electrical signals to and from the conductive and resistive surfaces. For example, a source voltage and a reference voltage may be provided from external sources via two of such connection points, and an output signal may be provided out to external circuitry (not shown) or to a controller (not shown) via the third connection point.

A three or more pin male connector (not shown) may be sized to be seated in a female connection slot 110 integral in the sensor housing 88 such that when seated, electrical connections are made between individual pins on the male connector and corresponding connection points on the sensor housing, such as points 104-108. Electrical conductors between such pins and external devices allow for signal exchange, for example to apply information on the rotational position of the shaft 72 in automotive control and diagnostics.

FIGURE 6 illustrates a configuration of the element 70 (FIGURES 4 and 5) consistent with the three contactor redundant configuration of FIGURES 4 and 5. Connection points 112-124 are provided on the element 70 to allow electrical connection with the circuitry of the element and external circuitry, such as through the electrical connections described in FIGURE 5 applied in a redundant configuration. Connection points 112-124 may be conductive surfaces which may be brought into electrical contact with a corresponding one of seven pins of a male connector when such male connector is seated in a female connector of the sensor housing, consistent with the configuration of FIGURE 5.

Through such electrical connection, a source voltage Vin, such as approximately a five or twelve volt source, may be provided from an external voltage source through a male connector (not shown) to connection points 112 and 116, and a reference voltage Vref, such as a ground voltage, may be provided from an external reference voltage providing means through the male connector to connection points 120 and 122.

According to the contactor circuit configuration on the element 70 of FIGURE 6, connection point 118 provides a first displacement measurement signal S1, connection point 114 provides a second displacement measurement signal S2, and connection point 124 provides a third displacement measurement signal S3. These three signals may be carried out through the male connector (not shown) to circuitry or to a controller which may interpret the redundant information in a fault tolerant measurement of a displacement of the shaft 72 (FIGURE 4) or other moving automotive part, as described.

Specifically, signals Vin from connection points 112 and 116 are connected internally in the element 70 providing a redundant source voltage input to the element. From these inputs, Vin is provided to a first side of each of the resistive surfaces 64a, 64c, and 68b. Construction of these resistive surfaces may be as described for the resistive surface illustrated in FIGURE 3. The second side of the resistive surfaces are connected to Vref which is likewise provided in a redundant manner to the element 70 by connecting the Vref signals from connection points 120 and 122 internally in the element 70.

Each of the output connection points 114, 118, and 124 are connected to a corresponding conductive surface through a series resistor. Specifically, connection point (S1) 118 is connected to conductive surface 68c through resistor R1, which is approximately 1.7 kilo-ohms in this embodiment, connection point (S2) 114 is connected to conductive surface 64b through series resistor R2, which is approximately 450 ohms in this embodiment, and connection point (S3) 124 is connected to conductive surface 68a through series resistor R3, which is approximately 1.7 kilo-ohms in this embodiment. Construction of these conductive surfaces may be as described for the constructive surface illustrated in FIGURE 3.

The three series resistors R1, R2, and R3 provide short circuit protection in their respective circuits. Additionally, resistor R2 has a significantly different resistance value than resistor R1 or resistor R3, to improve detectability of common mode failures. In other words, sensor or system failures that result in a common voltage shift in the redundant output signals generated using the configuration of FIGURE 6 are detectable through the configuration of FIGURE 6, as such a common voltage shift would (eventually) result in a lack of output correspondence between the redundant output signals. Alternatively, if the gain provided by resistors R1-R3 was substantially the same, the sensors would continue to correspond in output magnitude despite such a common voltage shift and the failure may not be detected.

Dimensionally, conductive surfaces are paired with resistive surfaces along single elevations in the element 70. The specific pairs are 64a and 68a, 64b and 68b, and 64c and 68c. The single elevation must substantially match that of a corresponding one of the contactors 60a-60c described in FIGURE 4, which provides a beneficial reduced number of assembly tolerances over the prior art.

Correlation between the redundant sensors is provided by lining up the surfaces 68a-68c substantially along the single dimension X (FIGURE 6) and lining up the surfaces 64a-64c substantially along the single dimension Y. Then, if the corresponding contactors 60a-60c (FIGURE 4) are substantially centralised and of approximately the same length, such correlation is provided for.

Functionally, the element 70 of FIGURE 6 is in relative fixed position while the contactors, such as contactors 60a-60c illustrated in FIGURE 4, move with the moving automotive part, such as shaft 72 (FIGURE 4). A second end 66a of contactor 60a (FIGURE4) passes along conductive surface 68a while the first end 62a of contactor 60a passes along resistive surface 64a. The conductive electrical path from connection point (S3) 124 through series resistor R3 to conductive surface 68a through contactor 60a to the portion of resistive surface 64a between first end 62a (FIGURE 4) and the reference voltage at connection point 120 (or 122) varies in electrical resistance in proportion to the degree of rotation of the contactor 60a.

Likewise, the electrical resistance between connection point (S1) 118 and the reference voltage Vref varies in proportion to the degree of rotation of contactor 60b (FIGURE 4) and the electrical resistance between connection point S2 114 and the reference voltage Vref varies in proportion to the degree of rotation of contactor 60c (FIGURE 4) . This is consistent with well-known voltage dividing principles employed in conventional rotational position sensing applications. It is intended that, as shown by the circuitry disposed on element 70 of FIGURE 6, the voltage polarity of the output signals provided at connection points 114, 118, and 124 may vary from connection point to connection point and a fault detected whenever voltages at connection points of opposite polarity change in the same direction, such as upon occurrence of a failure changing the level of Vref or Vin. Furthermore, the resistivity of the resistive surfaces 64a, 68b, and 64c may vary from surface to surface to expand the scope of fault detection provided by the redundant configuration of this embodiment.

The disclosures in United States patent application no. 08/171,479, from which this application claims priority, and in the abstract accompanying this application are incorporated herein by reference.

## Claims

1. Sensing apparatus for measuring the degree of rotation of a shaft (72), comprising a housing (88) surrounding a length of the shaft; an electrically conductive contactor (40,60a-c) including a first contactor end (42,62a-c) and a second contactor end (46,66a-c) opposite to the first contactor end; coupling means (94) disposed on the contactor between the first and second contactor ends for coupling of the contactor to a portion of the length of shaft (72); a length of electrically conductive material (44,68a-c) and a length of electrically resistive material (48,64a-c) both positioned on the housing such that an electrically conductive path is formed from a first predetermined reference position on the length of electrically conductive material through the contactor to a second predetermined reference position on the length of electrically resistive material, wherein as the shaft rotates the second contactor end moves along the length of resistive material, thereby varying the electrical resistance of the electrically conductive path by including a varying portion of the resistive material in the path; and generating means (112-124) for generating a signal indicative of the varying electrical resistance as a measure of the degree of rotation of the shaft.

2. Sensing apparatus according to claim 1, comprising a plurality of electrically conductive contactors (60a-c) positioned substantially in parallel relative to one another, a pair of lengths of conductive and resistive material (68a-c,64a-c) and generating means (112-124) being provided for each contactor; and comparing means for comparing the generated electrical signals to determine the degree of rotation of the shaft.

3. Sensing apparatus according to claim 1 or 2, wherein for the or each set of contactor and lengths of conductive and resistive material, an electrically conductive path is formed from the first predetermined reference position along the length of the electrically conductive material through a portion of the electrically conductive material substantially to the first contactor end, through the contactor substantially to the second contactor end, through a portion of the electrically resistive material to the second predetermined reference position along the length of the electrically resistive material.

4. Sensing apparatus according to any preceding claim, wherein the or each electrically conductive contactor (40,60a-c) is substantially linear.

5. Sensing apparatus according to any preceding claim, wherein the or each coupling means (94) is disposed approximately in the middle of the or its respective contactor (40,60a-c).

6. Sensing apparatus according to any preceding claim, wherein the first and second contactor ends of the or each contactor (40,60a-c) extend out from the or its respective coupling means (94) in opposed directions.

7. Sensing apparatus according to any preceding claim, wherein the generated signal is an electrical voltage drop across the or each electrically conductive path.
